# FASCICULE DE BREVET EUROPEEN

(11) **EP 0 499 754 B1**
(45) Date de publication et mention de la délivrance du brevet: **29.11.1995**
(21) Numéro de dépôt: 91400364.5
(22) Date de dépôt: 13.02.1991
(51) Int. Cl.: H02G 15/013, H02G 15/192

(54) **Bouchon pour fixer de façon étanche un câble électrique à une ouverture et manchon de protection de câbles comportant de tels bouchons**
Verschluss zum dichten Befestigen eines elektrischen Kabels in einer Öffnung und Kabelschutzmuffe mit solchen Verschlüssen
Closure for securely fixing an electrical cable to an opening and protective cable sleeve comprising such closures

(43) Date de publication de la demande: 26.08.1992
(73) Titulaire: ETABLISSEMENTS MOREL - ATELIERS ELECTROMECANIQUES DE FAVIERES, F-28170 Chateauneuf-en-Thymerais (FR)
(72) Inventeur: Morel, Jacques, F-28170 Chateauneuf en Thymerais (FR); Morel, Didier, F-28170 Chateauneuf en Thymerais (FR)
(74) Mandataire: Keib, Gérard

(56) Documents cités:
- EP-A- 98 765
- EP-A- 206 854
- EP-A- 0 023 099
- EP-A- 0 073 748
- EP-A- 0 246 113
- DE-A- 2 826 584
- DE-C- 419 820
- FR-A- 2 466 887
- FR-A- 2 596 215
- GB-A- 2 193 605
- US-A- 4 704 499

## Description

La présente invention concerne un bouchon permettant de fixer de façon étanche un câble électrique ou téléphonique à un tube ou embout de section circulaire de passage dudit câble.

On a déjà décrit par exemple dans le brevet français 2 466 887 de la demanderesse, un embout destiné à entourer un câble électrique ou téléphonique et permettant de réaliser un raccordement étanche entre ce câble et l'extrémité d'un tube de passage dudit câble.

Cet embout est destiné à être rempli d'une matière d'étanchéité telle que de la mousse de polyuréthanne. L'expérience a montré que l'étanchéité ainsi obtenue n'était pas toujours suffisante.

De plus, de tels embouts n'assurent pas une fixation axiale suffisante du câble à l'extrémité du tube.

Par ailleurs, la fixation du câble à l'extrémité du tube par de tels embouts est difficilement amovible, de sorte qu'il n'est pas facile de remplacer un câble par un câble neuf ou présentant un diamètre différent.

Le but de la présente invention est de remédier aux inconvénients de la réalisation précitée, en créant un bouchon permettant de fixer de façon étanche un câble électrique ou téléphonique à un tube ou embout de section circulaire de passage dudit câble, ce bouchon assurant une parfaite étanchéité vis à vis du tube ou embout et du câble, une parfaite fixation axiale par rapport au tube ou embout et ce bouchon pouvant être enlevé facilement de ce tube ou embout pour remplacer le câble.

A cet effet, l'invention concerne un bouchon permettant de fixer de façon étanche un câble électrique ou téléphonique à un tube ou embout de section circulaire de passage dudit câble, ce bouchon comprenant un corps creux constitué par deux coquilles destinées à être fixées autour du câble et comprenant au moins deux mâchoires retenues radialement dans ledit corps et comportant chacune une ouverture centrale de passage du câble et prenant appui radialement sur ce câble lors de la fixation par serrage des deux coquilles l'une sur l'autre, les deux mâchoires définissant entre elles une chambre destinée à être remplie d'une matière d'étanchéité (voir EP-A-0 023 099).

Le bouchon conforme à l'invention est caractérisé en ce que ledit corps creux comprend une partie pouvant s'engager de manière étanche, ou ledit corps creux peut s'engager de manière étanche, à l'intérieur du tube ou embout, ladite partie présentant une collerette, ou ledit corps creux présentant respectivement une collerette ou des protubérances tubulaires, adaptée(s) à venir en butée contre le tube ou embout, et en ce que des moyens amovibles sont prévus pour retenir axialement ledit corps creux par rapport au tube ou embout.

Les deux mâchoires assurent une excellente fixation axiale du câble par rapport au corps creux étant donné que les ouvertures de ces mâchoires sont serrées sur le câble lors de l'assemblage des deux coquilles du corps creux.

Par ailleurs, la matière d'étanchéité remplissant la chambre comprise entre les deux mâchoires et entourant le câble assure une excellente étanchéité entre ce câble et le corps creux.

De plus, étant donné que le corps creux est fixé de façon amovible au tube ou à l'embout de passage du câble, il peut être enlevé facilement de ce tube ou embout pour remplacer le câble.

Selon une version avantageuse de l'invention, le bouchon destiné à être fixé à l'extrémité d'un tube de passage du câble comprend en outre un manchon destiné à être introduit dans ladite extrémité du tube et dont le diamètre extérieur correspond au diamètre intérieur dudit tube, ce manchon comportant tout autour de l'une de ses extrémités des moyens pour fixer de façon amovible une extrémité du corps creux audit manchon.

Selon une version préférée de l'invention, le manchon comporte à son extrémité une collerette et le corps creux comprend à son extrémité adjacente une gorge annulaire conformée pour s'engager sur ladite collerette du manchon.

De préférence, le manchon comporte en son intérieur un opercule qui l'obture complètement, cet opercule étant relié à la face interne du manchon par une zone annulaire amincie et frangible permettant d'arracher cet opercule pour passer le câble.

Ainsi, lorsque le tube ne contient aucun câble, l'opercule du manchon ferme de façon étanche l'extrémité du tube, de sorte que l'humidité ne peut pas pénétrer dans celui-ci. Pour passer le câble dans le tube, il suffit d'enlever l'opercule, de fixer le bouchon autour du câble, d'injecter une matière d'étanchéité dans le bouchon puis de fixer celui-ci à l'extrémité du tube.

Selon une autre version de l'invention, le bouchon destiné à être fixé dans un embout de section circulaire faisant saillie d'une paroi présente la particularité que le corps creux comprend sur sa surface extérieure au moins deux gorges annulaires recevant chacune un joint torique destiné à réaliser l'étanchéité entre la surface extérieure du corps creux et la surface interne dudit embout.

De préférence, le corps creux comprend près de l'une de ses extrémités une collerette destinée à prendre appui contre l'extrémité libre de l'embout et près de son autre extrémité une rainure annulaire destinée à recevoir une clavette en forme d'arc de cercle destinée à verrouiller de façon amovible le corps creux contre la face intérieure de ladite paroi.

Ladite collerette et ladite clavette verrouillent ainsi axialement le bouchon à l'embout, d'une manière qui est facilement amovible.

D'autres particularités et avantages de l'invention apparaîtront encore dans la description ci-après,
- la figure 1 est une vue en coupe longitudinale d'un bouchon conforme à l'invention fixé autour d'un câble et à l'extrémité d'un tube,
- la figure 2 est une vue en coupe suivant le plan II-II de la figure 1,
- la figure 3 est une vue en plan du bouchon fixé au tube (représenté en partie),
- la figure 4 est une vue en plan d'une autre version d'un bouchon selon l'invention,
- la figure 5 est une vue en bout de ce bouchon,
- la figure 6 est une vue en coupe longitudinale du bouchon selon les figures 4 et 5, fixé autour d'un câble et monté dans un embout.
- la figure 7 est une vue en coupe longitudinale d'une variante de réalisation d'un bouchon selon l'invention fixé à un tube,
- la figure 8 est une vue en coupe longitudinale d'une variante de réalisation d'un bouchon logé dans l'embout d'un manchon de protection d'épissures de câbles,
- la figure 9 est une vue analogue à la figure 8 concernant une autre réalisation du bouchon,
- la figure 10 est une vue en plan de dessus partielle d'un manchon de protection d'épissures, la demi-coquille supérieure de celui-ci étant enlevée, montrant trois bouchons conformes à l'invention.

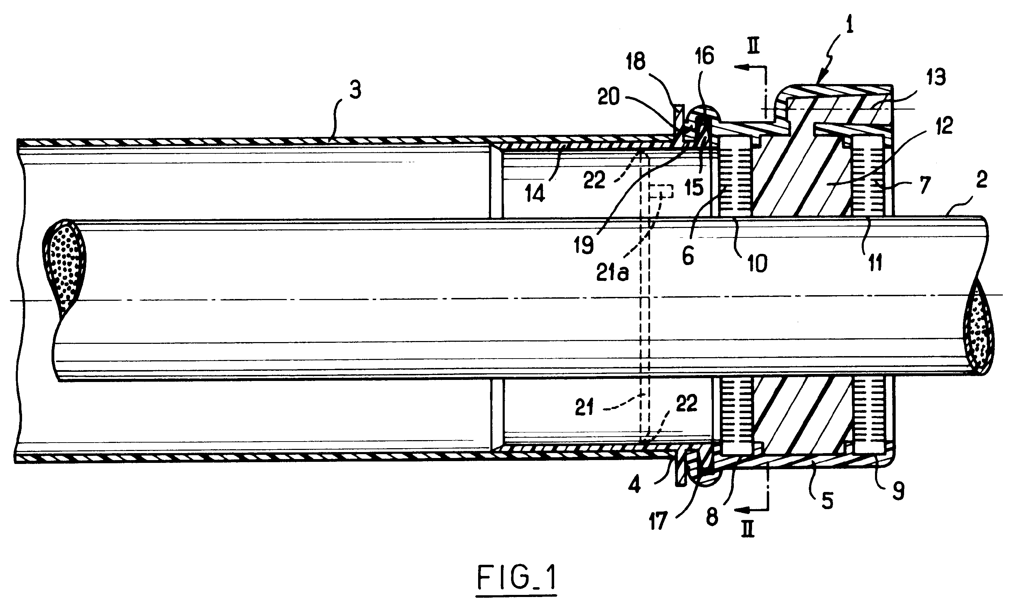

Dans la réalisation des figures 1 à 3, on a représenté un bouchon 1 entourant un câble téléphonique s'étendant dans un tube 3 par exemple enterré. Ce bouchon 1 est fixé de façon étanche à l'extrémité 4 présentant une ouverture circulaire du tube 3.

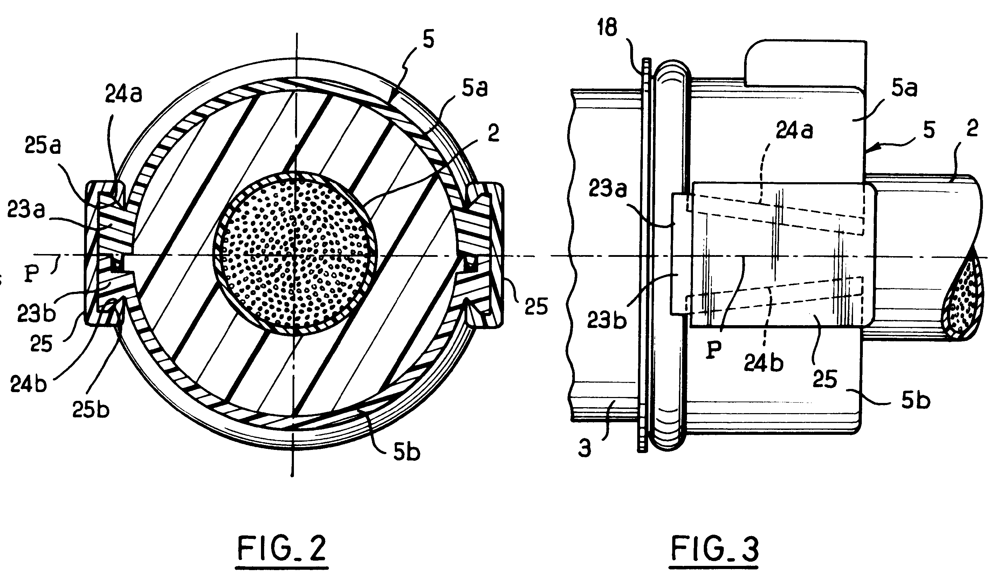

Le bouchon 1 comprend un corps creux 5 sensiblement cylindrique constitué par deux coquilles en matière plastique 5a, 5b (voir figures 2 et 3) fixées autour du câble 2 et comprenant deux mâchoires 6, 7 retenues radialement dans des gorges 8, 9 pratiquées dans ledit corps et comportant chacune une ouverture centrale 10, 11 de passage du câble 2. Ces ouvertures centrales 10, 11 prennent appui radialement sur le câble 2 lors de la fixation par serrage des deux coquilles 5a, 5b l'une sur l'autre.

Les deux mâchoires 6, 7 définissent entre elles une chambre 12 entourant le câble 2 et remplie d'une matière d'étanchéité qui est injectée dans cette chambre 12 par une ouverture 13 pratiquée dans la paroi du corps 5. Par ailleurs, le corps creux 5 est fixé de façon amovible et étanche à l'ouverture circulaire 4 de passage du câble 2 dans le tube 3.

Les mâchoires 6 et 7 ont été décrites notamment dans le brevet français 2 582 854 de la demanderesse. Elles sont en matière plastique et présentent des rainures annulaires qui leur donnent une élasticité radiale qui permet de réaliser une étanchéité entre les ouvertures 10 et 11 de ces mâchoires 6, 7 et la surface extérieure du câble.

Sur la figure 1, on voit que le bouchon 1 comprend en outre, un manchon 14 en matière plastique engagé dans l'extrémité 4 du tube 3 et dont le diamètre extérieur correspond au diamètre intérieur de ce tube 3. La liaison étanche entre le manchon 14 et la surface interne du tube 3 est assurée par collage. Ce manchon 14 comporte tout autour de son extrémité des moyens pour le fixer de façon amovible à l'extrémité adjacente du corps creux 5.

Le manchon 14 comporte à cet effet, à son extrémité, une collerette 15 et le corps creux 5 comprend à son extrémité adjacente une gorge annulaire 16 conformée pour s'engager sur la collerette 15 du manchon 14. Par ailleurs, un joint d'étanchéité 17 est prévu entre la gorge annulaire 16 et la collerette 15. De plus, le manchon 14 comprend en arrière de sa collerette 15 une seconde collerette 18 qui prend appui contre l'extrémité 4 du tube 3 de passage du câble 2. Les deux collerettes 15 et 18 définissent entre elles un espace annulaire 19 dans laquelle est engagée la bordure d'extrémité 20 du corps creux 5 adjacente à la gorge annulaire 16.

En outre, on voit également sur la figure 1 que le manchon 14 comporte en son intérieur un opercule 21 (en pointillés) qui l'obture complètement (lorsque le tube 3 n'est pas traversé par un câble), cet opercule 21 étant relié à la face interne du manchon 14 par une zone annulaire amincie frangible 22 permettant de supprimer cet opercule 21 pour passer le câble 2 dans le tube 3.

Comme indiqué sur les figures 2 et 3, les deux coquilles 5a, 5b du corps creux 5 comportent de chaque côté deux parties en saillies 23a, 23b prenant appui l'une sur l'autre et pourvue chacune d'une rampe inclinée 24a, 24b par rapport au plan de contact P des deux parties en saillie 23a, 23b. Ces rampes 24a, 24b sont associées à un organe d'assemblage 25 de section sensiblement en C comportant deux contre-rampes 25a, 25b complémentaires aux rampes 24a, 24b des deux parties en saillie et pouvant s'engager à force sur ces dernières pour serrer les deux parties en saillie l'une sur l'autre.

Ces deux organes d'assemblage 25 peuvent cependant être remplacés par des vis traversant les parties en saillie 23a, 23b.

La figure 2 montre également qu'un joint d'étanchéité est prévu entre les parties en saillie 23a et 23b.

Pour fixer le bouchon 1 que l'on vient de décrire à l'extrémité du tube 1, on procède comme suit. On supposera que le manchon 14 est déjà en place à l'extrémité 4 du tube. Ce manchon 14 ferme de façon étanche l'extrémité du tube 3 ce qui préserve l'intérieur de celui-ci contre l'humidité et la poussière. Pour mettre en place le câble 2 dans le tube 3, il suffit d'enlever l'opercule 21 en tirant sur la languette 21a pour l'arracher suivant la zone circulaire 22 adjacente à la surface interne du manchon 14, après quoi on peut engager le câble 2 dans le tube 3.

On fixe ensuite autour du câble 2, les deux coquilles 5a, 5b munies de mâchoires 6, 7 dont les ouvertures 10, 11 ont été préalablement adaptées au diamètre du câble 2. Avant de serrer les coquilles 5a, 5b l'un sur l'autre, on engage la gorge terminale 16 des deux coquilles sur la collerette 15 du manchon 14. Il suffit ensuite de pousser de chaque côté du bouchon 1, les organes d'assemblage 25 sur les rampes des parties en saillie 23a, 23b.

Pour terminer, on injecte une matière d'étanchéité dans l'ouverture 13 du bouchon, pour remplir la chambre 12 comprise entre les mâchoires 6, 7 et qui entoure le câble 2.

Si l'on veut retirer le câble 2 du tube 3, pour le remplacer par un câble neuf ou de diamètre différent, il suffit de démonter les deux coquilles 5a, 5b et de répéter l'opération ci-dessus, en utilisant un bouchon neuf.

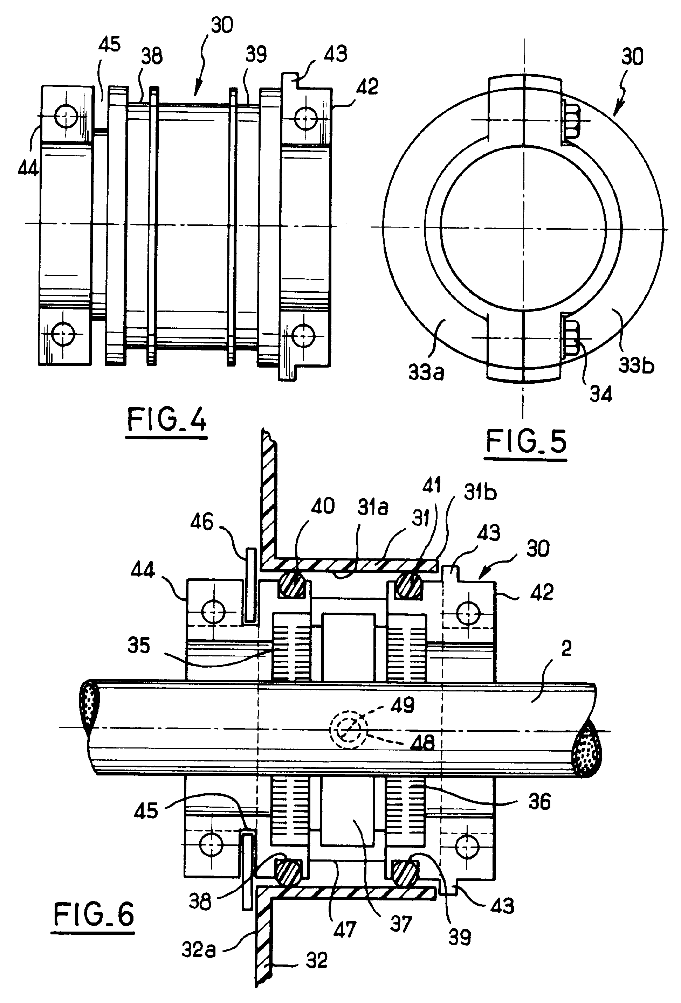

Sur les figures 4 et 5, on a représenté un bouchon 30 destiné à être fixé comme indiqué sur la figure 6 dans un embout 31 de section circulaire faisant saillie d'une paroi 32.

Comme dans le cas de la réalisation selon les figures 1 à 3, le bouchon 30 est de forme cylindrique et comprend deux coquilles 33a, 33b (voir figure 5) assemblées l'une sur l'autre au moyen de vis 34.

Le corps creux cylindrique défini par les deux coquilles 33a, 33b comprend en son intérieur deux mâchoires 35, 36 identiques aux mâchoires 6, 7 de la réalisation selon les figures 1 à 3 s'étendant radialement et prenant appui élastiquement sur le câble 2.

Ces mâchoires 35, 36 définissent entre elles une chambre 37 destinée à être remplie d'une matière d'étanchéité.

Le corps creux cylindrique 30 comprend sur sa surface extérieure deux gorges annulaires 38, 39 recevant chacune un joint torique 40, 41 réalisant l'étanchéité entre la surface extérieure du corps creux 30 et la surface interne cylindrique 31a de l'embout 31. On voit en outre sur la figure 6 que le corps creux 30 comprend près de son extrémité 42 une collerette 43 prenant appui contre l'extrémité libre 31b de l'embout 31 et près de son autre extrémité 44 une rainure annulaire 45 recevant une clavette ou bague élastique en forme d'arc de cercle 46 permettant de verrouiller de façon amovible le corps creux 30 contre la face intérieure 32a de la paroi 32.

Par ailleurs, la surface extérieure du corps creux 30 comporte entre les deux gorges 38, 39 prévues pour recevoir un joint d'étanchéité 40, 41, un évidement annulaire 47 qui communique par un orifice 48 avec la chambre intérieure 37 comprise entre les deux mâchoires 35, 36. L'embout 31 comporte d'autre part un orifice 49 d'injection d'une matière d'étanchéité destinée à remplir l'évidement annulaire 47 et la chambre 37.

Pour fixer de façon étanche le câble 2 dans l'embout 31, au moyen du bouchon 30, on procède comme suit :

On fixe les deux coquilles 33a, 33b autour du câble 2. On place les joints toriques 40 et 41 dans les gorges 38, 39 prévues sur la surface extérieure du bouchon 30. Il suffit ensuite de glisser le bouchon 30 dans l'embout 31 jusqu'à ce que la collerette 43 du bouchon vienne buter contre l'extrémité libre 31b de l'embout 31.

On verrouille ensuite le bouchon 30 contre la paroi 32 en engageant la bague 46 dans la rainure 45. En fin d'opération, on injecte dans l'ouverture 49 du bouchon 30, une matière d'étanchéité qui remplit l'évidement 47 compris entre le bouchon et la face intérieure de l'embout 31 ainsi que la chambre 37.

Comme dans la réalisation selon les figures 1 à 3, le bouchon 30 peut être retiré de l'embout 31 pour enlever le câble et le remplacer par un câble neuf ou ayant un diamètre différent.

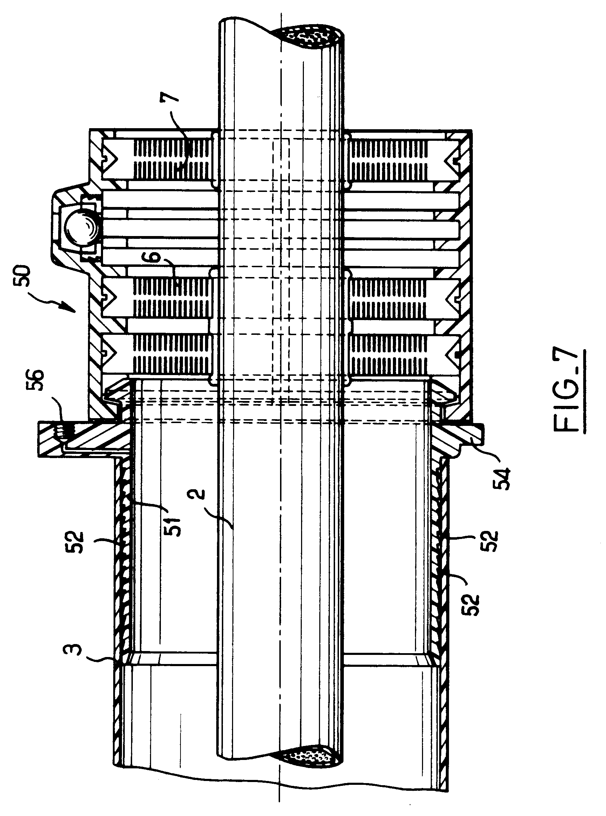

Dans la réalisation de la figure 7, le bouchon 50 diffère de la version représentée à la figure 1.

Le manchon 51 comprend sur sa surface extérieure engagée dans le tube 3 de passage du câble 2, une série de gorges annulaires 52. Ces gorges 52 présentent une section longitudinale en dents de scie. Celles-ci facilitent le collage du manchon 51 dans le tube 3.

Par ailleurs, dans cet exemple, le manchon 51 est constitué par deux demi-coquilles assemblées suivant un plan passant par son axe.

De plus, le manchon 51 comprend près de la collerette 54 une ouverture 55 de passage comportant un raccord 56 permettant le vissage d'une valve (non représentée) de prélèvement de gaz. On peut ainsi détecter la présente éventuelle de gaz dans le tube 3 et l'éliminer par aspiration.

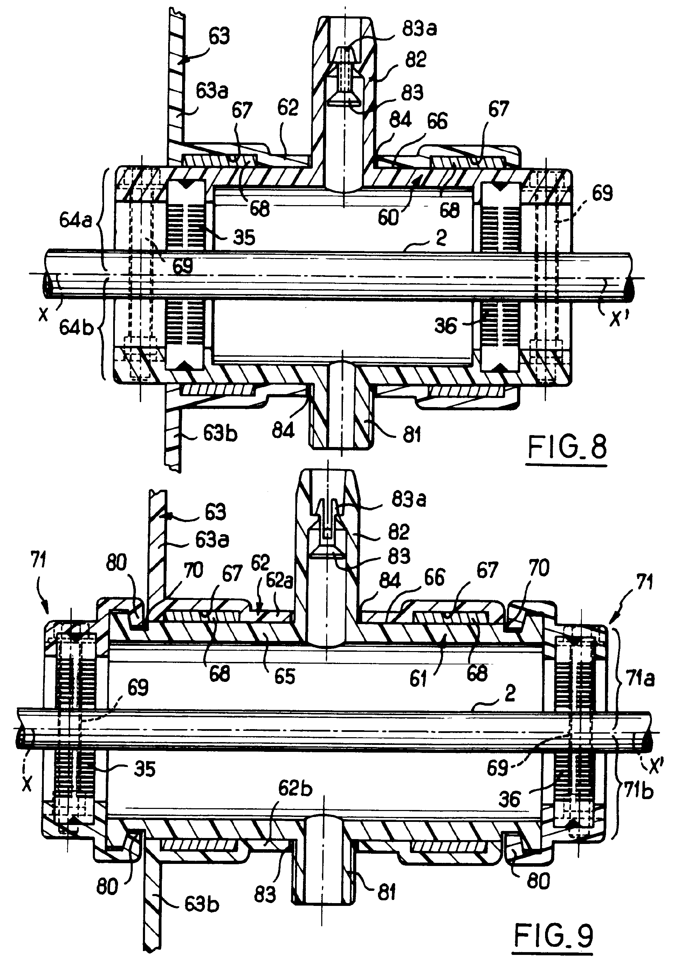

Dans les réalisations des figures 8 et 9, les bouchons 60, 61 sont fixés dans un embout 62 de section circulaire faisant saillie d'une paroi 63 constituant la paroi d'extrémité d'un manchon de protection de l'épissure d'un ou de plusieurs câbles. Le corps creux 64, 65 présente une surface extérieure lisse 66 dont le diamètre correspond au diamètre intérieur de l'embout 62.

La surface intérieure de l'embout 64, 65 comporte au moins deux gorges annulaires 67 de section rectangulaire recevant chacune un joint 68 de section complémentaire en matière souple pour réaliser l'étanchéité entre la surface extérieure 66 du corps creux 64, 65 et la surface interne de l'embout 62.

Dans l'exemple de la figure 8, le corps creux 64 est constitué par deux demi-coquilles 64a, 64b assemblées suivant un plan passant par l'axe X-X' du corps creux. Ces deux demi-coquilles 64a, 64b sont serrées l'une sur l'autre au moyen de vis 69 placées aux deux extrémités opposées du corps creux 64.

Dans la réalisation de la figure 9, le corps creux 65 est constitué par un corps tubulaire d'une seule pièce comportant près de chacune de ses extrémités une gorge annulaire 70. Ces extrémités du corps 65 sont munies chacune d'un porte-mâchoire 71 en deux parties 71a, 71b assemblées l'une contre l'autre perpendiculairement à l'axe X-X′ du corps tubulaire 65 au moyen de vis de serrage 69.

Chaque porte-mâchoire 79 comporte sur son bord adjacent au corps tubulaire 65 une rainure 80 en arc de cercle dirigée vers l'axe X-X′ du corps 65 et engagée dans la gorge annulaire 70 de ce corps. Les deux rainures 80 en arc de cercle forment une rainure circulaire continue lorsque les deux parties 71a, 71b du porte-mâchoire 70 sont assemblées l'une contre l'autre, comme indiqué sur la figure 9.

Comme indiqué précédemment la paroi 63 est la paroi d'extrémité d'un manchon pour protéger l'épissure de câbles électriques 2. Ce manchon comporte deux demi-coquilles 63a, 63b assemblées l'une sur l'autre suivant un plan passant par l'axe X-X′ du manchon. Chaque paroi d'extrémité 63 dudit manchon comporte au moins un embout 62 de section circulaire faisant saillie vers l'intérieur du manchon et recevant un bouchon 60 ou 61.

Dans la réalisation représentée sur les figures 8 et 9, chaque embout 62 est en deux parties 62a, 62b. Chaque partie d'embout 62, 62a est moulée d'une seule pièce avec l'autre partie d'embout et viennent s'assembler l'une sur l'autre suivant le plan d'assemblage des deux demi-coquilles 63a, 63b du manchon qui passe par l'axe X-X′.

On voit également que le corps creux 64, 65 de chaque bouchon 60, 61 présente deux protubérances tubulaires 81, 82 diamétralement opposées. Chacune de ces protubérances est engagée dans une ouverture 83, 84 pratiquée dans la partie 62a, 62b de l'embout correspondante.

Ainsi, lorsque les deux demi-coquilles 63a, 63b sont assemblées suivant X-X′, le corps creux 64 ou 65 est retenu axialement dans l'embout 62 du fait de l'engagement des éléments tubulaires 81, 82 dans les ouvertures 83, 84.

Dans l'exemple des figures 8 et 9, les deux protubérances tubulaires 81, 82 sont constituées respectivement par un conduit 81 d'injection de résine à l'intérieur du corps creux 64, 65 et un conduit 82 dans lequel est monté de façon coulissante un piston 83a muni d'une tige 84a pouvant faire saillie à l'extérieur du conduit pour indiquer le niveau de remplissage de la résine.

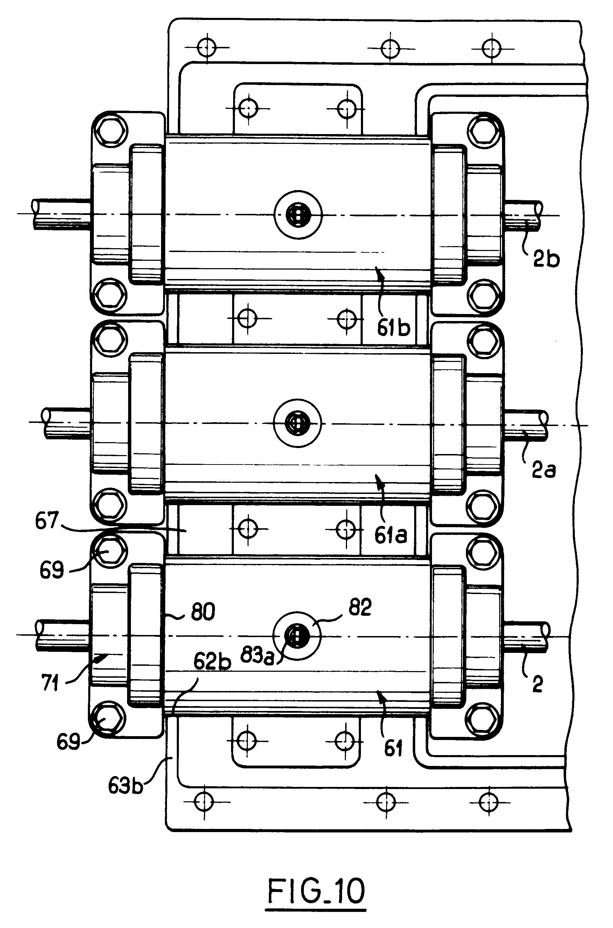

A la figure 10, on a représenté la demi-coquille inférieure 63b d'un manchon de protection pour trois câbles 2, 2a, 2b.

La demi-coquille 63b porte à cet effet trois parties d'embout telles que 62b dans lesquelles sont logés trois bouchons 61, 61a, 61b. Ces trois bouchons 61, 61a, 61b sont emprisonnés à l'intérieur du manchon après mise en place de la demi-coquille supérieure (non représentée sur la figure 10) sur la demi-coquille inférieure 63b.

## Revendications

1. Bouchon permettant de fixer de façon étanche un câble électrique ou téléphonique (2) à un tube (3) ou embout (31, 62) de section circulaire de passage dudit câble, ce bouchon comprenant un corps creux (5, 30, 64, 65) constitué par deux coquilles (5a, 5b ; 33a, 33b ; 64a, 64b ; 71a, 71b) destinées à être fixées autour du câble (2) et comprenant au moins deux mâchoires (6, 7 ; 35, 36) retenues radialement dans ledit corps (5, 30, 64, 65) et comportant chacune une ouverture centrale (10, 11) de passage du câble (2) et prenant appui radialement sur ce câble lors de la fixation par serrage des deux coquilles l'une sur l'autre, les deux mâchoires définissant entre elles une chambre (12, 37) destinée à être remplie d'une matière d'étanchéité, caractérisé en ce que ledit corps creux (5) comprend une partie (14, 51) pouvant s'engager de manière étanche, ou ledit corps creux (30 ; 64, 65) peut s'engager de manière étanche, à l'intérieur du tube (3) ou embout (31, 62), ladite partie (14, 51) présentant une collerette (18, 54), ou ledit corps creux (30; 64, 65) présentant respectivement une collerette (43) ou des protubérances tubulaires (81, 82), adaptée(s) à venir en butée contre le tube (3) ou embout (31, 62), et en ce que des moyens amovibles sont prévus pour retenir axialement ledit corps creux (5, 30, 64, 65) par rapport au tube (3) ou embout (31, 62).

2. Bouchon conforme à la revendication 1, ce bouchon étant destiné à être fixé à l'extrémité (4) d'un tube (3) de passage du câble (2), caractérisé en ce qu'il comprend en outre un manchon (14) destiné à être introduit dans ladite extrémité (4) du tube et dont le diamètre extérieur correspond au diamètre intérieur dudit tube, ce manchon (14) comportant tout autour de l'une de ses extrémités des moyens pour fixer de façon amovible une extrémité (20) du corps creux (5) audit manchon (14).

3. Bouchon conforme à la revendication 2, caractérisé en ce que le manchon (14) comporte à son extrémité une collerette (15) et le corps creux (5) comprend à son extrémité adjacente une gorge annulaire (16) conformée pour s'engager sur ladite collerette (15) du manchon (14).

4. Bouchon conforme à la revendication 3, caractérisé en ce qu'un joint d'étanchéité (17) est prévu entre la gorge annulaire (16) et la collerette (15).

5. bouchon conforme à l'une des revendications 3 ou 4, caractérisé en ce que le manchon (14) comprend en arrière de sa collerette (15) une seconde collerette (18) destinée à prendre appui contre l'extrémité (4) du tube (3) de passage du câble (2), les deux collerettes (15, 18) définissant entre elles un espace annulaire (19) recevant la bordure d'extrémité (20) du corps creux (5) adjacente à la gorge annulaire (16).

6. Bouchon conforme à l'une des revendications 2 à 5, caractérisé en ce que le manchon (14) comporte en son intérieur un opercule (21) qui l'obture complètement, cet opercule (21) étant relié à la face interne du manchon (14) par une zone annulaire amincie et frangible (22) permettant d'arracher cet opercule (21) pour passer le câble (2).

7. Bouchon conforme à l'une des revendications 1 à 6, caractérisé en ce que les deux coquilles (5a, 5b) du corps creux comportent de chaque côté deux parties en saillie (23a, 23b) destinées à prendre appui l'une sur l'autre et pourvues chacune d'une rampe (24a, 24b) inclinée par rapport au plan (P) de contact des deux parties en saillie (23a, 23b), ces dernières étant associées à un organe d'assemblage (25) de section sensiblement en C comportant deux contre-rampes (25a, 25b) complémentaires aux rampes (24a, 24b) des deux parties en saillie (23a, 23b) et pouvant s'engager à force sur ces dernières pour serrer les deux parties en saillie l'une sur l'autre.

8. Bouchon conforme à la revendication 1, ce bouchon étant destiné à être fixé dans un embout (31) de section circulaire faisant saillie d'une paroi (32), caractérisé en ce que le corps creux (30) comprend sur sa surface extérieure au moins deux gorges annulaires (38, 39) recevant chacune un joint torique (40, 41) destiné à réaliser l'étanchéité entre la surface extérieure du corps creux (30) et la surface interne dudit embout (31).

9. Bouchon conforme à la revendication 8, caractérisé en ce que le corps creux (31) comprend près de l'une de ses extrémités une collerette (43) destinée à prendre appui contre l'extrémité libre de l'embout (31) et près de son autre extrémité une rainure annulaire (45) destinée à recevoir une clavette (46) en forme d'arc de cercle destinée à verrouiller de façon amovible le corps creux (30) contre la face intérieure de ladite paroi (32).

10. Bouchon conforme à l'une des revendications 8 ou 9, caractérisé en ce que la surface extérieure du corps creux (30) comporte entre les deux gorges (38, 39) prévues pour recevoir un joint d'étanchéité, un évidement annulaire (47) qui communique par un orifice (48) avec la chambre intérieure (37) comprise entre les deux mâchoires (35, 36), l'embout (31) comportant un orifice (49) d'injection d'une matière d'étanchéité destinée à remplir l'évidement annulaire (47) et ladite chambre (37).

11. Bouchon conforme à l'une des revendications 1 à 7, caractérisé en ce que le manchon (51) comprend sur sa surface extérieure destinée à être engagée dans le tube (3) de passage du câble (2), une série de gorges annulaires (52).

12. Bouchon conforme à la revendication 11, caractérisé en ce que les gorges (52) présentent une section longitudinale en dents de scie.

13. Bouchon conforme à la revendication 11 ou 12, caractérisé en ce que le manchon (51) est constitué par deux demi-coquilles assemblées suivant un plan passant par son axe.

14. Bouchon conforme à l'une des revendications 11 à 13, caractérisé en ce que le manchon (51) comprend près de la collerette (54) une ouverture (55) de passage permettant le vissage d'une valve de prélèvement de gaz.

15. Bouchon conforme à la revendication 1, ce bouchon (60, 61) étant destiné à être fixé dans un embout (62) de section circulaire faisant saillie d'une paroi (63) pouvant constituer la paroi d'extrémité d'un manchon de protection de l'épissure d'un ou de plusieurs câbles, caractérisé en ce que le corps creux (64, 65) présente une surface extérieure lisse (66) dont le diamètre correspond au diamètre intérieur de l'embout (62) et en ce que la surface intérieure de l'embout comporte au moins deux gorges annulaires (67) de section rectangulaire recevant chacune un joint (68) de section complémentaire en matière souple pour réaliser l'étanchéité entre la surface extérieure (66) du corps creux (64, 65) et la surface interne de l'embout (62).

16. Bouchon conforme à la revendication 15, caractérisé en ce que le corps creux (64) est constitué par deux demi-coquilles (64a, 64b) assemblées suivant un plan passant par l'axe (X-X′) du corps creux, ces deux demi-coquilles (64a, 64b) étant serrées l'une sur l'autre au moyen de vis (69) placées aux deux extrémités opposées du corps creux (64).

17. Bouchon conforme à la revendication 15, caractérisé en ce que le corps creux (65) est constitué par un corps tubulaire d'une seule pièce comportant près de chacune de ses extrémités une gorge annulaire (70), ces extrémités étant munies chacune d'un porte-mâchoire (71) en deux parties (71a, 71b) assemblées l'une contre l'autre perpendiculairement à l'axe (X-X′) du corps tubulaire (65) au moyen de vis de serrage (69), chaque porte-mâchoire (71) comportant sur son bord adjacent au corps tubulaire (65) une rainure (80) en arc de cercle dirigée vers l'axe (X-X′) du corps et engagée dans la gorge annulaire (70) de ce corps, les deux rainures (80) en arc de cercle formant une rainure circulaire continue lorsque les deux parties (71a, 71b) du porte-mâchoire (70) sont assemblées l'une contre l'autre.

18. Manchon pour protéger l'épissure de câbles électriques (2, 2a, 2b), comportant deux demi-coquilles (63a, 63b) assemblées l'une sur l'autre suivant un plan passant par l'axe (X-X′) du manchon, chaque extrémité dudit manchon comportant au moins un embout (62) de section circulaire faisant saillie vers l'intérieur du manchon et recevant un bouchon (60, 61) conforme à l'une des revendications 15 à 17.

19. Manchon conforme à la revendication 18, caractérisé en ce que chaque embout (62) est en deux parties (62a, 62b), chaque partie d'embout étant moulée d'une seule pièce avec l'autre partie d'embout et venant s'assembler l'une sur l'autre suivant le plan d'assemblage des deux demi-coquilles (63a, 63b) du manchon.

20. Manchon conforme à la revendication 19, caractérisé en ce que le corps creux (64, 65) de chaque bouchon (60, 61) présente deux protubérances tubulaires (81, 82) diamétralement opposées, chacune de ces protubérances étant engagée dans une ouverture (83, 84) pratiquée dans la partie de l'embout correspondante.

21. Manchon conforme à la revendication 20, caractérisé en ce que les deux protubérances (81, 82) tubulaires sont constituées respectivement par un conduit d'injection de résine à l'intérieur du corps creux et un conduit dans lequel est monté de façon coulissante un piston (83a) muni d'une tige (84a) pouvant faire saillie à l'extérieur du conduit pour indiquer le niveau de remplissage de la résine.

## Patentansprüche

1. Verschluß, der es gestattet, ein Elektro- oder Telefonkabel (2) dicht in einem Rohr (3) oder Rohransatz (31, 62) kreisförmigen Querschnitts für den Durchgang des Kabels zu befestigen, wobei dieser Verschluß einen Hohlkörper (5, 30, 64, 65) enthält, der durch zwei Schalen (5a, 5b ; 33a, 33b ; 64a, 64b ; 71a, 71b) gebildet ist, die dazu bestimmt sind, um das Kabel (2) herum befestigt zu werden, und die wenigstens zwei Klemmbacken (6, 7; 35, 36) enthalten, die radial in dem Körper (5, 30, 64, 65) gehalten sind, jeweils eine mittlere Durchgangsöffnung (10, 11) für das Kabel (2) aufweisen und während der gegenseitigen Befestigung der beiden Schalen durch Zusammenpressen radial an diesem Kabel abgestützt sind, und wobei zwischen den beiden Klemmbacken eine Kammer (12, 37) gebildet ist, die dazu bestimmt ist, mit einem Dichtungsmaterial gefüllt zu werden, dadurch gekennzeichnet, daß der Hohlkörper (5) einen Teil (14, 51) aufweist, der dicht, oder der Hohlkörper (30, 64, 65) dicht, in das Innere des Rohres (3) oder Rohransatzes (31, 62) einsetzbar ist, wobei das Teil (14, 51) einen Flansch (18, 54) aufweist, oder der Hohlkörper (30, 64, 65) einen Flansch (43) beziehungsweise rohrförmigen Vorsprünge (81, 82) aufweist, die dazu vorgesehen ist oder sind, an dem Rohr (3) oder Rohransatz (31, 62) in Anlage zu kommen, und daß abnehmbare Mittel vorgesehen sind, um den Hohlkörper (5, 30, 64, 65) hinsichtlich des Rohres (3) oder Rohransatzes (31, 62) axial festzuhalten.

2. Verschluß nach Anspruch 1, der dazu bestimmt ist, an dem Ende (4) eines Durchgangsrohres (3) für das Kabel (2) befestigt zu werden, dadurch gekennzeichnet, daß er überdies eine Muffe (14) enthält, die dazu bestimmt ist, in das Ende (4) des Rohres eingeführt zu werden und deren Außendurchmesser dem Innendurchmesser des Rohres entspricht, wobei diese Muffe um den ganzen Umfang eines ihrer Enden herum Mittel aufweist, um ein Ende (20) des Hohlkörpers (5) an der Muffe (14) abnehmbar zu befestigen.

3. Verschluß nach Anspruch 2, dadurch gekennzeichnet, daß die Muffe (14) an ihrem Ende einen Kragen (15) aufweist und daß der Hohlkörper (5) an seinem angrenzenden Ende eine Ringnut (16) besitzt, die auf den Kragen (15) der Muffe (14) aufsetzbar ist.

4. Verschluß nach Anspruch 3, dadurch gekennzeichnet, daß zwischen der Ringnut (16) und dem Kragen (15) eine Dichtung (17) vorgesehen ist.

5. Verschluß nach einem der Ansprüche 3 oder 4, dadurch gekennzeichnet, daß die Muffe (14) hinter ihrem Kragen (15) einen zweiten Kragen (18) besitzt, der dazu bestimmt ist, sich an dem Ende (4) des Durchgangsrohres (3) für das Kabel (2) abzustützen, wobei zwischen den beiden Krägen (15, 18) ein Ringraum (19) gebildet ist, der den an die Ringnut (16) angrenzenden Endrand (20) des Hohlkörpers (5) aufnimmt.

6. Verschluß nach einem der Ansprüche 2 bis 5, dadurch gekennzeichnet, daß die Muffe (14) in ihrem Inneren einen Dekkel (21) enthält, der sie vollständig verschließt, wobei dieser Deckel (21) mit der Innenseite der Muffe (14) über eine geschwächte und abbrechbare Ringzone (22) verbunden ist, die es gestattet, diesen Deckel (21) herauszureißen, um das Kabel (2) hindurchzuführen.

7. Verschluß nach einem der Ansprüche 1 bis 6, dadurch gekennzeichnet, daß die beiden Schalen (5a, 5b) des Hohlkörpers auf jeder Seite zwei vorspringende Teile (23a, 23b) aufweisen, die dazu bestimmt sind, in gegenseitige Anlage zu treten, und die jeweils mit einer Rampe (24a, 24b) versehen sind, die bezüglich der Berührungsebene (P) der beiden vorspringenden Teile (23a, 23b) geneigt ist, wobei diesen letzteren ein im Querschnitt im wesentlichen C-förmiges Montageelement (25) zugeordnet ist, das zwei Gegenrampen (25a, 25b) besitzt, die zu den Rampen (24a, 24b) der beiden vorspringenden Teile (23a, 23b) komplementär sind, und das unter Aufbringung einer Kraft auf diese letzteren aufsetzbar ist, um die beiden vorspringenden Teile gegeneinander zu drücken.

8. Verschluß nach Anspruch 1, der dazu bestimmt ist, in einem Ansatz (31) kreisförmigen Querschnitts befestigt zu werden, der von einer Wand (32) vorspringt, dadurch gekennzeichnet, daß der Hohlkörper (30) an seiner Außenfläche wenigstens zwei Ringnuten (38, 39) aufweist, die jeweils eine Ringdichtung (40, 41) aufnehmen, die dazu bestimmt ist, die Abdichtung zwischen der Außenfläche des Hohlkörpers (30) und der Innenfläche des Ansatzes (31) zu bewirken.

9. Verschluß nach Anspruch 8, dadurch gekennzeichnet, daß der Hohlkörper (31) in der Nähe des einen seiner Enden einen Kragen (43) aufweist, der dazu bestimmt ist, sich an dem freien Ende des Ansatzes (31) abzustützen, und in der Nähe seines anderen Endes eine Ringnut (45) besitzt, die dazu bestimmt ist, einen Keil (46) in Form eines Kreisbogens aufzunehmen, der dazu vorgesehen ist, den Hohlkörper (30) in lösbarer Weise gegenüber der Innenseite der Wand (32) zu verriegeln.

10. Verschluß nach einem der Ansprüche 8 oder 9, dadurch gekennzeichnet, daß die Außenfläche des Hohlkörpers zwischen den beiden Nuten (38, 39), die zur Aufnahme einer Ringdichtung vorgesehen sind, eine ringförmige Ausnehmung (47) besitzt, die über eine Öffnung (48) mit der inneren Kammer (37) in Verbindung steht, die zwischen den beiden Klemmbacken (35, 36) liegt, wobei der Ansatz (31) eine Öffnung (49) zum Einspritzen eines Dichtungsmaterials enthält, das dazu bestimmt ist, die ringförmige Ausnehmung (47) und die Kammer (37) zu füllen.

11. Verschluß nach einem der Ansprüche 1 bis 7, dadurch gekennzeichnet, daß die Muffe (51) an ihrer Außenfläche, die dazu bestimmt ist, in das Durchgangsrohr (3) für das Kabel (2) eingesetzt zu werden, eine Reihe von Ringnuten (52) aufweist.

12. Verschluß nach Anspruch 11, dadurch gekennzeichnet, daß die Nuten (52) im Längsschnitt eine Sägezahnform aufweisen.

13. Verschluß nach einem der Ansprüche 11 oder 12, dadurch gekennzeichnet, daß die Muffe (51) durch zwei Halbschaben gebildet ist, die in einer durch ihre Achse verlaufenden Ebene zusammengesetzt sind.

14. Verschluß nach einem der Ansprüche 11 bis 13, dadurch gekennzeichnet, daß die Muffe (51) in der Nähe des Flansches (54) eine Durchgangsöffnung (55) aufweist, die das Einschrauben eines Gasentnahmeventils gestattet.

15. Verschluß nach Anspruch 1, wobei dieser Verschluß (60, 61) dazu bestimmt ist, in einem Ansatz (62) kreisförmigen Querschnitts befestigt zu werden, der von einer Wand (63) vorspringt, die die Endwand einer Schutzmuffe zum Schutz der Spleißstelle eines oder mehrer Kabel bilden kann, dadurch gekennzeichnet, daß der Hohlkörper (64, 65) eine glatte Außenfläche (66) aufweist, deren Durchmesser dem Innendurchmesser des Ansatzes (62) entspricht, und daß die Innenfläche des Ansatzes zumindest zwei Ringnuten (67) rechteckigen Querschnitts enthält, die jeweils eine Dichtung (68) komplementären Querschnitts aus nachgiebigem Material aufnehmen, um die Abdichtung zwischen der Außenfläche (66) des Hohlkörper (64, 65) und der Innenfläche des Ansatzes (62) zu bewirken.

16. Verschluß nach Anspruch 15, dadurch gekennzeichnet, daß der Hohlkörper (64) durch zwei Halbschalen (64a, 64b) gebildet ist, die in einer durch die Achse (X-X′) des Hohlkörpers verlaufenden Ebene zusammengesetzt sind, wobei diese beiden Halbschalen (64a, 64b) mittels Schrauben (69) gegeneinandergepreßt sind, die an den beiden entgegengesetzten Enden des Hohlkörpers (64) vorgesehen sind.

17. Verschluß nach Anspruch 15, dadurch gekennzeichnet, daß der Hohlkörper (65) durch einen einteiligen Rohrkörper gebildet ist, der in der Nähe seiner Enden jeweils eine Ringnut (70) besitzt, wobei diese Enden jeweils mit einem Klemmbakkenträger (71) aus zwei Teilen (71a, 71b) versehen sind, die senkrecht zu der Achse (X-X′) des Rohrkörpers (65) mittels Klemmschrauben (69) aneinandergesetzt sind, jeder Klemmbakkenträger (71) an seinem an den Rohrkörper (65) angrenzenden Rand eine kreisbogenförmige Nut (80) aufweist, die zu der Achse (X-X′) des Körpers hin gerichtet ist und in die Ringnut (70) dieses Körpers eingreift, und die beiden kreisbogenförmigen Nuten (80) eine kontinuierliche kreisförmige Nut bilden, wenn die beiden Teile (71a, 71b) des Klemmbackenträgers (70) aneinandergesetzt sind.

18. Muffe zum Schützen der Spleißstelle von Elektrokabeln (2, 2a, 2b) mit zwei Halbschalen (63a, 63b), die in einer durch die Achse (X-X′) der Muffe verlaufenden Ebene aneinandergesetzt sind, wobei jedes Ende der Muffe wenigstens einen Ansatz (62) kreisförmigen Querschnitts aufweist, der in das Innere der Muffe vorsteht und einen Verschluß (60, 61) entsprechend einem der Ansprüche 15 bis 17 aufnimmt.

19. Muffe nach Anspruch 18, dadurch gekennzeichnet, daß jeder Ansatz (62) aus zwei Teilen (62a, 62b) besteht, wobei jeder Ansatzteil aus einem Stück mit dem anderen Ansatzteil gegossen ist und die Ansatzteile in der Montageebene der beiden Halbschalen (63a, 63b) der Muffe aneinandergesetzt werden.

20. Muffe nach Anspruch 19, dadurch gekennzeichnet, daß der Hohlkörper (64, 65) eines jeden Verschlusses (60, 61) zwei diametral entgegengesetzte rohrförmige Vorsprünge (81, 82) aufweist, wobei jeder dieser Vorsprünge in eine Öffnung (83, 84) eingesetzt ist, die in dem entsprechenden Teil des Ansatzes ausgebildet ist.

21. Muffe nach Anspruch 20, dadurch gekennzeichnet, daß die beiden rohrförmigen Vorsprünge (81, 82) durch eine Einspritzleitung zum Einspritzen von Harz in das Innere des Hohlkörpers bzw. eine Leitung gebildet sind, in der ein Kolben (83a) verschiebbar angeordnet ist, der mit einer Stange (84a) versehen ist, die aus der Leitung heraustreten kann, um den Füllstand des Harzes anzuzeigen.

## Claims

1. A stopper for sealingly fixing an electric or telephone cable (2) to a tube (3) or terminal (31, 62) of circular cross-section through which the cable extends, the stopper comprising a hollow body (5, 30, 64, 65) made up of two shells (5a, 5b ; 33a, 33b ; 64a, 64b ; 71a, 71b) for securing around the cable (2), and comprising at least two jaws (6, 7 ; 35, 36) radially retained in the body (5, 30, 64, 65) and each having a central opening (10, 11) for the cable (2) and radially bearing on the cable when the two shells are secured to one another by clamping, the two jaws defining a chamber (12, 37) between them for filling with a sealing-tight material, characterized in that the hollow body (5) has a part (14, 51) which can fit in sealing-tight manner, or the hollow body (30, 64, 65) can fit in sealing-tight manner, into the tube (3) or terminal (31, 62), said part (14, 51) having a collar (18, 54), or the hollow body (30, 64, 65) having a collar (43) or tubular protuberances (81, 82), respectively, for abutting the tube (3) or terminal (31, 62), and in that removable means are provided for axially retaining the hollow body (5, 30, 64, 65) with respect to the tube (3) or terminal (61, 62).

2. A stopper according to claim 1, the stopper being adapted for securing to an end (4) of a tube (3) through which the cable (2) extends, the stopper being characterised in that it also comprises a sleeve (14) for inserting into the tube end (4) and having an outer diameter equal to the inner diameter of the tube, the sleeve (14) comprising means all round one of its ends for removably securing one end (20) of the hollow body (5) to said sleeve (14).

3. A stopper according to claim 2, characterized in that the sleeve (14) has a collar (15) at its end and the hollow body (5) has an annular groove (16) at its adjacent end, the groove being adapted to engage the collar (15) of the sleeve (14).

4. A stopper according to claim 3, characterized in that a seal (17) is provided between the annular groove (16) and the collar (15).

5. A stopper according to claim 3 or 4, characterized in that behind the collar (15), the sleeve (14) has a second collar (18) for bearing against the end (4) of the tube (3) through which the cable (2) extends, the two collars (15, 18) co-operating to define an annular space (19) receiving the end edge (20) of the hollow body (5) adjacent the annular groove (16).

6. A stopper according to any of claims 2 to 5, characterized in that the sleeve (14) has an internal cover (21) which covers it completely, the cover (21) being connected to the internal surface of the sleeve (14) by a thin breakable annular region (22) for pulling out the cover (21) in order to admit the cable.

7. A stopper according to any of claims 1 to 6, characterised in that the two shells (5a, 5b) of the hollow body have two projecting parts (23a, 23b) on each side, the parts being adapted to bear against one another and each having a slope (24a, 24b) at an angle relative to the plane (P) in which the two projecting parts (23a, 23b) come in contact, the projecting parts being associated with an assembly means (25) having a substantially C-shaped cross-section and comprising two counter-slopes (25a,25b) complementary with the slopes (24a, 24b) on the two projecting parts (23a, 23b) and adapted to be force-fitted on the aforementioned parts in order to clamp the two projecting parts against one another.

8. A stopper according to claim 1, the stopper being adapted to be secured in a terminal (31) having a circular cross-section and projecting from a wall (32), charactetised in that the outer surface of the hollow body (30) is formed with at least two annular grooves (38, 39) each receiving an O-ring (40, 41) for obtaining sealing-tightness between the outer surface of the hollow body (30) and the inner surface of the terminal (31).

9. A stopper according to claim 8, characterized in that the hollow body (31), near one of its ends, has a collar (43) for bearing against the free and of the terminal (31), whereas near its other end it has an annular slot (45) for receiving a key (46) having the shape of an arc of a circle and adapted to removably lock the hollow body (30) against the inner surface of the wall (32).

10. A stopper according to claim 8 or 9, characterized in that between the two grooves (38, 39) for receiving a seal, the outer surface of the hollow body (30) has an annular recess (47) which via an orifice (48) communicates with the inner champber (37) between the two jaws (35, 36), the terminal (31) having an orifice (49) for injecting a sealing material for filling the annular recess (47) and the chamber (37).

11. A stopper according to any of claims 1 to 7, characterised in that the sleeve (51) has a set of annular grooves (52) on its outer surface for engaging in the tube (3) through which the cable (2) passes.

12. A stopper according to claim 11, characterised in that the grooves (52) have a sawtooth longitudinal section.

13. A stopper according to claim 11 or 12, characterised in that the sleeve (51) is made up of two half-shells fitted together along a plane extending through the axis of the sleeve.

14. A stopper according to any of claims 11 to 13, characterised in that the sleeve (51) has a through opening (55) near the collar (54) for screwing a gas-sampling valve.

15. A stopper according to claim 1, the stopper (60, 61) being adapted for fixing in a terminal (62) having a circular cross-section and projecting from a wall (63) which can be the end wall of a sleeve for protecting the splicing of one or more cables, characterised in that the hollow body (64, 65) has a smooth outer surface (66) having a diameter equal to the inner diameter of the terminal (62), and the inner surface of the terminal has at least two annular grooves (67) of rectangular section, each receiving a seal (68) having a complementary section and made of flexible material in order to obtain sealing-tightness between the outer surface (66) of the hollow body (64, 65) and the inner surface of the terminal (62).

16. A stopper according to claim 15, characterised in that the hollow body (64) is made up of two half-shells (64a, 64b) fitted along a plane extending through the axis (X-X′) of the hollow body, the two half-shells (64a, 64b) being clamped to one another by screws (69) disposed at two opposite ends of the hollow body (64).

17. A stopper according to claim 15, characterised in that the hollow body (65) comprises a one-piece tubular body formed with an annular groove (70) near each of its ends, the ends each having a jaw-holder (71) in two parts (71a, 71b) fitted against one another at right angles to the axis (X-X′) of the tubular body (65) by clamping screws (69), each jaw-holder (71), on its edge adjacent the tubular body (65), having a slot (80) in the form of an arc of a circle and extending towards the axis (X-X′) of the body and fitted into the annular groove (70) of the body, the two arcuate slots (80) forming a continuous circular slot when the two parts (71a, 71b) of the jaw-holder (70) are fitted against one another.

18. A sleeve for protecting the splicing of electric cables (2, 2a, 2b) and comprising two half-shells (63a, 63b) fitted to one another along a plane extending through the axis (X-X′) of the sleeve, each end of the sleeve having at least one terminal (62) of circular cross-section and projecting towards the interior of the sleeve and receiving a stopper (60, 61) according to any of claims 15 to 17.

19. A sleeve according to claim 18, characterised in that each terminal (62) is in two parts (62a, 62b), each part of the terminal being moulded in one piece with the other part of the terminal, the two parts being fitted together along the assembly plane of the two half-shells (63a, 63b) of the sleeve.

20. A sleeve according to claim 19, characterised in that the hollow body (64, 65) of each stopper (60, 61) has two diametrically opposite tubular projections (81, 82), each projection fitting into an opening (83, 84) formed in the corresponding part of the terminal.

21. A sleeve according to claim 20, characterised in that the two tubular projections (81, 82) respectively comprise a duct for injecting resin inside the hollow body and a duct in which a piston (83a) is slidably mounted and has a rod (84a) for projecting out of the duct in order to show the level to which it is filled with resin.
